# EUROPÄISCHE PATENTANMELDUNG

(11) **EP 1 275 531 A2**
(43) Veröffentlichungstag der Anmeldung: **15.01.2003**
(21) Anmeldenummer: 02100789.3
(22) Anmeldetag: 09.07.2002
(51) Int. Cl.: B60C 23/04

(54) **Anordnung zur Betriebsspannungserzeugung für eine elektrische Baugruppe eines Fahrzeugs**

(30) Priorität: 10.07.2001 DE 10133493
(71) Anmelder: Philips Corporate Intellectual Property GmbH, 20099 Hamburg (DE); Koninklijke Philips Electronics N.V., 5621 BA Eindhoven (NL)
(72) Erfinder: Nowottnick, Jürgen c/o Philips Corporate, 52066, Aachen (DE)
(74) Vertreter: Volmer, Georg, Dipl.-Ing.

(57) **Zusammenfassung**

Eine erfindungsgemäße Anordnung zur Betriebsspannungserzeugung für wenigstens eine elektrische Baugruppe (5) eines Fahrzeugs mit einem Rad/Reifen weist ein Piezoelektrisches Element (3) auf, welches so angeordnet ist, dass es bei Bewegung des Fahrzeugs infolge von dann auftretenden Schwankungen des Reifendrucks in Schwingungen versetzt wird. Die dann auftretende Ausgangswechselspannung des Piezoelektrischen Elements (3) wird zur Spannungsversorgung der elektrischen Baugruppe (5) eingesetzt.

## Beschreibung

Die Erfindung bezieht sich auf eine Anordnung zur Betriebsspannungserzeugung für wenigstens eine elektrische Baugruppe eines Fahrzeugs. Das Fahrzeug weist wenigstens ein Rad mit einem Reifen auf, der mit Luft oder einem anderen Gas gefüllt ist.

Zur Versorgung derartiger elektrischer Baugruppen, die an einem Kfz-Reifen montiert sind, werden üblicherweise Batterien oder Akkumulatoren eingesetzt. Bei solchen Baugruppen kann es sich beispielsweise um Sensoren zur Messung des Reifendrucks bzw. der Reifentemperatur handeln. Die Versorgung derartiger Baugruppen mit Batterien oder Akkumulatoren hat diveise Nachteile. Batterien oder Akkumulatoren sind oft unwirtschaftlich und weisen eine eingsschränkte Lebensdauer auf. Ggf. müssen diese sogar während der Lebenszeit des Fahrzeugs ausgetauscht werden. Da es sich um rotierende Teile handelt, sind bei Batterien oder Akkumulatoren hohe Anforderungen an die Zuverlässigkeit der Spannungsversorgung schwierig zu erfüllen.

Es ist Aufgabe der Erfindung, eine Anordnung der eingangs genannten Art zur Betriebsspannungserzeugung anzugeben, welche zuverlässig arbeitet und welche ohne auszutauschende Teile auskommt.

Diese Aufgabe ist erfindungsgemäß durch die Merkmale des Patentanspruchs 1 gelöst:

Anordnung zur Betriebsspannungserzeugung für wenigstens eine elektrische Baugruppe, welche an einem Rad mit einem Reifen eines Fahrzeugs vorgesehen ist, mit einem Piezoelektrischen Element, welches so angeordnet ist, dass es bei Bewegung des Fahrzeugs in Folge von dann auftretenden Schwankungen des Reifendrucks in Schwingungen versetzt wird, und dessen dann auftretende Ausgangswechselspannung zur Spannungsversorgung der elektrischen Baugruppe einsetzbar ist.

Ein Fahrzeug mit einer an einem Rad befindlichen elektrischen Baugruppe, die mit Betriebsspannung zu versorgen ist, weist einen mit Luft oder einem ähnlichen Gas gefüllten Reifen auf. Bei Bewegung des Fahrzeugs entstehen infolge der Fahrbahnunebenheiten Luftdruckschwankungen in dem Reifen des Fahrzeugs. Diese werden in der erfindungsgemäßen Anordnung mittels des Piezoelektrischen Elementes in der Weise ausgenutzt, dass die Reifenluftdruckschwankungen das Piezoelektrische Element in Schwingungen versetzen. Dieses erzeugt dann eine elektrische Spannung, welche zur Versorgung wenigstens einer elektrischen Baugruppe in dem Fahrzeug, insbesondere an dem Rad des Fahrzeugs, einsetzbar ist. Das Piezoelektrische Element arbeitet äußerst zuverlässig und erzeugt eine Spannung aufgrund schwankenden mechanischen Drucks, der auf das Element ausgeübt wird. In der erfindungsgemäßen Anordnung wird dieser schwankende Druck durch den schwankenden Fülldruck des Reifens bei Bewegung des Fahrzeugs erzeugt.

Die erfindungsgemäße Anordnung erzeugt völlig autonom eine Betriebsspannung für die elektrische Baugruppe und benötigt insbesondere keinerlei Batterien, Akkumulatoren oder Ähnliches. Auch ist die Lebensdauer eines derartigen Piezoelektrischen Elements unbegrenzt, so dass die erfindungsgemäße Anordnung für die Lebenszeit eines Fahrzeugs bzw. Rads/Reifens ohne Austausch von Teilen geeignet ist.

Die erfindungsgemäße Anordnung ist ferner preiswert realisierbar. Sie gestattet eine dezentrale Spannungsversorgung der Sensor-Elektronik an dem Rad/Reifen des Fahrzeugs ohne eine Verbindung zu diesem.

Wie gemäß weiteren Ausgestaltungen der Erfindung nach den Ansprüchen 2 und 3 vorgesehen ist, kann das Piezoelektrische Element vorteilhaft an einem Ventil des Reifens oder im Mantel des Reifens angeordnet sein. In beiden Fällen kann der schwankende Fülldruck des Reifens zur Schwingungserzeugung des Piezoelektrischen Elements eingesetzt werden.

Gegebenenfalls kann, wie gemäß einer weiteren Ausgestaltung der Erfindung nach Anspruch 4 vorgesehen ist, das Ausgangssignal des Piezoelektrische Elements mittels einer Aufbereitungselektronik weiter aufbereitet werden, die dann ihrerseits die Spannungsversorgung der elektrischen Baugruppe an dem Rad vornimmt. Eine derartige Aufbereitung kann beispielsweise in Form eines Spannungsreglers oder einer Gleichrichterschaltung vorgesehen sein.

Prinzipbedingt liefert das Piezoelektrische Element nur dann eine Spannung, wenn sich das Fahrzeug in Bewegung befindet und somit Schwankungen des Fülldrucks im Reifen auftreten. Um auch bei Stillstand des Fahrzeugs eine Spannungsversorgung zu liefern, kann die Anordnung die gemäß einer weiteren Ausgestaltung der Erfindung nach Anspruch 6 vorgesehen ist, einen Akkumulator aufweisen, welcher mittels der von dem Piezoelektrischen Element gelieferten Spannung aufgeladen wird und welcher seinerseits auch bei Stillstand des Fahrzeugs eine Spannungsversorgung der elektrischen Baugruppe gewährleistet.

Bei der elektrischen Baugruppe kann es sich beispielsweise, wie gemäß einer weiteren Ausgestaltung der Erfindung nach Anspruch 7 vorgesehen ist, um einen Reifendrucksensor und/oder Reifentemperatursensor handeln. Derartige Sensoren sind zunehmend in Kraftfahrzeugen vorgesehen. Dabei tritt das Problem auf, dass diese Sensoren für die Lebenszeit des Autos und/oder des Rades ausgelegt sein müssen und mit einer autonom arbeitenden Spannungsversorgung gekoppelt sein müssen. Genau diese Voraussetzungen erfüllt die erfindungsgemäße Anordnung.

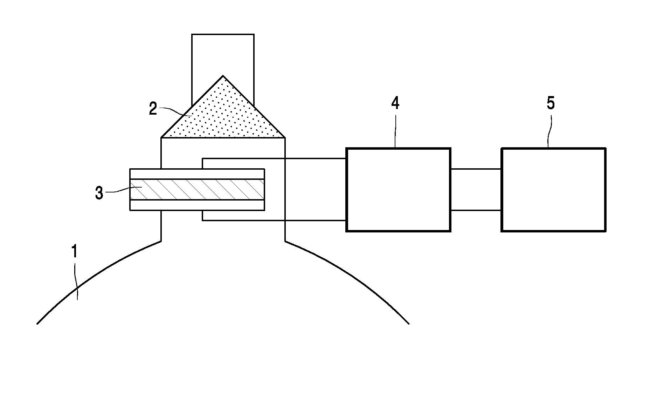

Nachfolgend wird ein Ausführungsbeispiel der Erfindung anhand der einzigen Figur der Zeichnung erläutert.

Die einzige Figur zeigt in schematischer Darstellung einen Reifen 1 eines im übrigen nicht dargestellten Fahrzeugs. Der Reifen 1 ist an einem Rad des Fahrzeugs vorgesehen und mit einem Gas, meist Luft, gefüllt.

Bei Bewegung des Fahrzeugs wird das Rad mit dem Reifen 1 in Rotation versetzt und rollt über einen Untergrund, meist eine Fahrbahn. Jeder Untergrund weist mindestens geringfügige Unebenheiten auf, die dazu führen, dass der mit Luft gefüllte Reifen 1 walkt, d.h. mehr oder weniger im Bereich der Aufstandsfläche eingedrückt wird, wodurch der Reifeninnendruck geringfügig schwankt.

In der erfindungsgemäßen Anordnung ist ein Piezoelektrisches Element 3 vorgesehen. In dem Beispiel gemäß der Figur ist das Piezoelektrische Element 3 in einem Ventil 2 des Reifens vorgssehen, welcher zur Luftbefüllung des Reifens 1 vorgssehen ist und welches infolgedessen unmittelbar mit der Luftfüllung des Reifens 1 in Verbindung steht.

Das Piezoelektrische Element 3 ist in dem Ventil 2 des Reifens 1 nun so angeordnet, dass es bei den oben erläuterten auftretenden Luftdruckschwankungen in dem Reifen 1 in geringfügige Bewegungen versetzt wird, d.h. also so, dass es den Luftdruckschwankungen ausgesetzt ist. Infolge dieser Druckschwankungen erzeugt das Piezoelektrische Element 3 eine elektrische Spannung, bei der es sich um eine Wechselspannung handelt.

Die schematische Darstellung in der Figur zeigt, dass diese elektrische Spannung an den beiden Endplatten des Piezoelektrischen Elementes 3 angegriffen und einer Aufbereitungselektrik 4 zugeführt wird.

Die Aufbereitungs-Elektronik 4 kann beispielsweise eine Gleichrichtung der von dem Piezoelektrischen Element 3 gelieferten Wechselspannung vornehmen. In der Aufbereitungselektronik 4 kann auch eine einfache Spannungsregelung der Wechselspannung vorgenommen werden. Ferner kann in der Aufbereitungselektronik 4 eine Art Akkumulator vorgesehen sein, der mit der gleichgerichteten, von dem Piezoelektrischen Element 3 gelieferten Wechselspannung geladen wird und der seinerseits eine Ausgangsgleichspannung auch bei Stillstand des Fahrzeugs und somit des Reifens 1 liefert.

Die Aufbereitungselektronik 4 ist ihrerseits mit einer elektrischen Baugruppe 5 gekoppelt, die in der Figur nur schematisch dargsstellt ist und bei der es sich beispielsweise um einen Reifendrucksensor oder einen Reifentemperatursensor handeln kann.

Derartige Sensoren sind zunehmend an Reifen vorgssehen und benötigen eine autonome Spannungsversorgung, d.h. eine solche Spannungsversorgung, die nicht mit dem Bordnetz des Fahrzeugs gekoppelt ist.

Handelt es sich um einen solchen Sensor, ist dieser an dem Reifen oder in dem Rad in der in der Figur nicht dargestellter Weise angeordnet.

Die erfindungsgemäße Anordnung gsmäß der Figur arbeitet völlig autonom, d.h., es ist keinerlei Verbindung zum Bordnetz des in der Figur nicht dargsstellten Fahrzeugs erforderlich. Die Lebensdauer des Piezoelektrischen Elements 3 ist im Prinzip unbegrenzt, d.h. während der Lebenszeit des Fahrzeugs und/oder des Rads/Reifens ist kein Austausch eines Elementes in der Anordnung erforderlich. Die Anordnung ist sehr einfach aufgebaut und daher störunanfällig und wirtschaftlich.

## Patentansprüche

1. Anordnung zur Betriebsspannungserzeugung für wenigstens eine elektrische Baugruppe (5), welche an einem Rad mit einem Reifen (1) eines Fahrzeugs vorgesehen ist, mit einem Piezoelekrischen Element (3), welches so angeordnet ist, dass es bei Bewegung des Fahrzeugs in Folge von dann auftretenden Schwankungen des Reifendrucks in Schwingungen versetzt wird, und dessen dann auftretende Ausgangswechselspannung zur Spannungsversorgung der elektrischen Baugruppe (5) einsetzbar ist.

2. Anordnung nach Anspruch 1,
**dadurch gekennzeichnet,**
**dass** das Piezoelektrische Element (3) an einem Ventil (2) des Reifens (1) angeordnet ist.

3. Anordnung nach Anspruch 1,
**dadurch gekennzeichnet,**
**dass** das Piezoelektrische Element (3) im Mantel des Reifens (1) angsordnet ist.

4. Anordnung nach einem der Ansprüche 1 bis 3,
**dadurch gekennzeichnet,**
**dass** das Ausgangssignal des Piezoelektrischen Elements (3) einer Aufbereitungselektronik (4) wie zum Beispiel einem Gleichrichter, einem Spannungsregler oder Ladekondensatoren zugsführt wird, welche die Spannungsversorgung der elektrischen Baugruppe (5) vornimmt.

5. Anordnung nach einem der Ansprüche 1 bis 4,
**dadurch gekennzeichnet,**
**dass** das Piezoelektrische Element (3) auch zur Messung des Reifendrucks eingesetzt wird.

6. Anordnung nach einem der Ansprüche 1 bis 5,
**dadurch gekennzeichnet,**
**dass** in der Anordnung ein Akkumulator vorgesehen ist, welcher mittels der von dem Piezoelektrischen Element (3) gelieferten und gleichgerichteten Spannung geladen wird und welcher die Versorgungsspannung für die elektrischen Baugruppe liefert.

7. Anordnung nach einem der Ansprüche 1 bis 5,
**dadurch gekennzeichnet,**
**dass** es sich bei der elektrischen Baugruppe (5) um einen Reifendrucksensor und/oder einen Reifentemperatursensor handelt.
